# EUROPEAN PATENT SPECIFICATION

(11) **EP 2 995 509 B1**
(45) Date of publication and mention of the grant of the patent: **14.03.2018**
(21) Application number: 15184751.4
(22) Date of filing: 10.09.2015
(51) Int. Cl.: B60R 19/48, B60R 19/56

(54) **SAFETY DEVICE**
SICHERHEITSVORRICHTUNG
DISPOSITIF DE SECURITE

(30) Priority: 11.09.2014 GB 201416057
(43) Date of publication of application: 16.03.2016
(73) Proprietor: Hymix Ltd, Birmingham, West Midlands B30 3JN (GB)
(72) Inventor: Humpish, Nick, Telford, Shropshire TF3 3AY (GB)
(74) Representative: Wynne-Jones, Lainé and James LLP

(56) References cited:
- JP-A- S5 977 945
- JP-A- S59 199 346
- US-A- 4 688 824
- US-A- 4 877 266
- US-A1- 2006 043 712
- US-B1- 6 450 556

## Description

This invention relates to a safety device and, more particularly, to an under-run safety device for a vehicle, such as a lorry, for use in assisting in the prevention of serious injury to vulnerable road users.

Side under-run guards are well known and are routinely provided on lorries and the like. Such guards substantially fill the space between the front and rear axles on large goods vehicles so that if, for example, a turning lorry hits a cyclist who is on the nearside of the vehicle, they are pushed aside, instead of being dragged under the vehicle. If a cyclist is caught by a vehicle with side guards, there is a greater chance of them surviving and avoiding serious injury than if they are caught under the vehicle. These guards can also incorporate safety messages for cyclists and pedestrians to warn them of the dangers of being too close to a large goods vehicle. In some cases, proximity sensors are provided to detect the presence of vulnerable road users, such sensors being linked to audio and/or visible warnings inside and/or outside the vehicle.

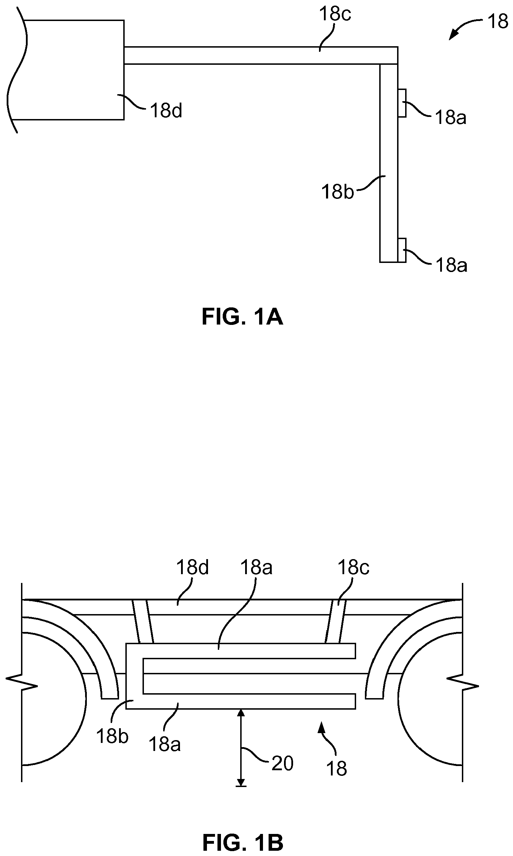

Typically, a large goods vehicle comprises a cab, a front axle and a rear axle, with the space between the axles being termed herein the axle interspace. Referring to Figures 1A and 1B of the drawings, side under-run guard 18 is fitted between the front and rear axles, which comprises an elongate, upper and lower (horizontal) side guard rails 18a extending from a vertical side-guard leg 18b, and is fitted to the chassis of the vehicle 10 by a set of projecting side-guard arms 18c bolted to the truck frame 18d; in some cases, the vertical leg may be attached to the underside of the bodywork. The guard 18, which is typically formed of aluminium or steel, is fitted to the vehicle such that it extends along substantially the entire length of the chassis between the front and rear axles, extending toward the ground, leaving a ground clearance gap 20. Under current regulations, the maximum gap 20 permitted under the lowest longitudinal member of the guard 18 is 500mm, and the current statutory minimum ground clearance gap 20 is specified as 160mm for vehicles having an axle interspace between 6m and 11.5m and 190mm for those having an axle interspace greater than 11.5m.

U.S. Patent No. 4,688,824 describes a guard for a school bus which consists of a sheet of flexible material which can be extended into an open planar state and which can be reduced into a compact folded state. A connector is connected to one edge of the sheet and is pivotally connected to a fixed portion of the school bus for movement between a first position in which it is effective to extend the sheet of flexible material and to a second position in which it is effective to cause the sheet of flexible material to be reduced to its compact state. A selectively actuated driving mechanism moves the connector selectively between the first and second positions.

The ground clearance gap 20 is essential to enable the vehicle to effectively negotiate the road, but it continues to pose a severe risk to vulnerable road users, especially those that do not necessarily appreciate that many trucks turn such that the rear axles take a smaller turn radius. Thus, existing side under-run guards may not be sufficient on their own to prevent serious injury to a vulnerable road user, as they can still be dragged under the vehicle through the ground clearance gap 20 and into the path of the rear wheels.

Embodiments of the present invention seek to address some of these issues and, in accordance with an aspect of the invention, provides a safety device for a vehicle having an under-run guard with a ground clearance gap between said guard and a surface on which said vehicle is located, the device comprising a switching mechanism for switching said device from a dormant mode to a live mode in response to one or more predetermined vehicle conditions, a deflector or shield which is configured to block said ground clearance gap and/or deflect an object away from said ground clearance gap, and an actuator, operable only when said device is in said live mode, to actuate said deflector and/or shield causing it to be moved or otherwise triggered from a first configuration to a second configuration.

In accordance with one embodiment of the present invention, there is provided a safety device for a vehicle having an under-run guard with a ground clearance gap between said guard and a surface on which said vehicle is located, the device comprising a deflector or shield which is configured to be deflected by a force and /or to leave said ground clearance gap substantially unobstructed in a first configuration, and deflect an object away from said ground clearance gap in a second configuration, and an actuator to actuate said deflector and/or shield causing it to be moved or otherwise triggered from said first configuration to said second configuration characterised in that the device further comprises:
- at least one sensor for monitoring said at least one predetermined vehicle condition;
- a switching mechanism for switching said device from a dormant mode to a live mode in response to one or more predetermined vehicle conditions; and
- a detector for detecting the presence of an object within a predetermined proximity of said ground clearance gap, wherein said actuator is operable and configured to actuate said deflector/shield in response to a said detection of the presence of an object within a predetermined proximity of said ground clearance gap only when the device is in said live mode.

In an exemplary embodiment of the invention, the deflector and/or shield may comprise a deflection member mounted relative to said under-run guard, and configured for movement between a first position, away from said ground clearance gap, and a second position in which said deflection member acts to at least partially block said ground clearance gap. The deflection member may be a planar deflection member formed of a resiliently flexible material, and said actuator is configured to move said deflection member from a raised position above said clearance gap, and a lowered position within said clearance gap. Movement of the deflection member may be linear, for example, substantially vertical relative to the guard.

The deflection member may be formed of a flexible material, and wherein, in said raised configuration, at least a lower portion thereof is folded or bent upwardly and secured above said clearance gap and, in said lowered configuration, said folded or bent portion of said deflection member is lowered and the deflection member is drawn taut to form a deflection surface within said clearance gap.

The safety device may further comprise a support member mounted for movement relative to said guard, wherein said deflection member is coupled or affixed to said support member and said actuator is configured to move said support member to cause respective movement of said deflection member from said raised position to said lowered position.

The deflection member may comprise a planar deflective member affixed to an inner surface of a support member, said support member being mounted for movement relative to said guard, and said actuator is configured to move said support member from said raised position, in which said deflection member leaves said clearance gap substantially unobstructed, and said lowered position in which said deflection member at least partially obstructs said clearance gap.

In another exemplary embodiment, the deflection member may comprise a planar deflection member formed of a resiliently flexible and/or elastic material and fixedly mounted so as to extend substantially vertically downwardly from said guard into said ground clearance gap, the device further comprising a support member mounted relative to said guard for movement between a first position away from the lower edge of said deflection member, and a second position at or adjacent a lower edge of said deflection member to the rear thereof.

In yet another exemplary embodiment, the deflector and/or shield may comprise an airbag unit configured to be mounted on said under-run guard. In this case, said airbag, when deployed, may be generally cylindrical and run along at least a portion of the length of said ground clearance gap, in front of the rear axle of said vehicle. It will be appreciated that the airbag, in its deployed configuration, may be shaped and configured in one, two or all three dimensions, to minimise the potential for minor injury from deployment and/or to maximise/optimise deflection of a vulnerable road user from the clearance gap.

The deflector member may comprise a solid or resiliently flexible wing blade, movably mounted relative to said guard, and configured for movement between a first position away from said ground clearance gap and a second position in which said deflector acts to at least partially block said ground clearance gap.

The at least one predetermined vehicle condition may optionally comprise one or more of the vehicle travelling below a predetermined speed, an indicator of said vehicle being deployed, and the steering axle of said vehicle being in a turning position.

The above-mentioned detector for detecting the presence of an object within a predetermined proximity of said ground clearance gap may comprise a radar detector, an image detector and/or a proximity sensor, and said device optionally further comprises an impact detector for detecting an impact on said under-run guard and causing actuation of said deflector and/or shield. As stated above, other possible sensors may detect conditions consistent with increased risk such as turning of the steering wheel/axle(s) beyond a certain point/direction and/or the road speed, either as a stand-alone condition or as a change of condition.

The safety device may comprise a detector for detecting a hazard proximal to said clearance gap, classifying said hazard as static or otherwise and/or having a predetermined density, said actuator being operable to cause said detector or shield to be moved to said second configuration in response to detection of a static hazard and/or a hazard of a predetermined density. Such a detector may comprise an image capture device or a radar device, and an analysis module for analysing signals from said detector so as to detect therefrom a hazard proximal to said ground clearance gap, and to determine therefrom if said hazard is static and/or of a predetermined density.

These and other aspects of the present invention will be apparent from the following description of the invention in which embodiments will now be described by way of examples only and with reference to the accompanying drawings, in which:
Figure 1A is a schematic side view of a side under-run guard according to the prior art;
Figure 1B is a schematic front view of a side under-run guard according to the prior art, bolted to a large goods vehicle (partially shown);
Figure 2A is a schematic side view of a side under-run guard including a safety device according to a first exemplary embodiment of the invention, when in the stowed condition;
Figure 2B is a schematic side view of the safety device of Figure 2A, when in the deployed condition;
Figure 2C is a schematic front view of a side under-run guard including a safety device according to an exemplary embodiment of the present invention;
Figure 3A is a schematic side view of a side under-run guard including a safety device according to a second exemplary embodiment of the invention, when in the stowed condition;
Figure 3B is a schematic side view of the safety device of Figure 3A, when in the deployed condition;
Figure 4A is a schematic side view of a side under-run guard including a safety device according to a third exemplary embodiment of the invention, when in the stowed condition;
Figure 4B is a schematic side view of the safety device of Figure 4A, when in the deployed condition;
Figure 5A is a schematic side view of a side under-run guard including a safety device according to a fourth exemplary embodiment of the invention, when in the stowed condition;
Figure 5B is a schematic side view of the safety device of Figure 5A, when in the deployed condition;
Figure 6A is a schematic side view of a side under-run guard including a safety device according to a fifth exemplary embodiment of the invention, when in the stowed condition;
Figure 6B is a schematic side view of the safety device of Figure 6A, when in the deployed condition;
Figure 7A is a schematic side view of a side under-run guard including a safety device according to a sixth exemplary embodiment of the invention, when in the stowed condition;
Figure 7B is a schematic side view of the safety device of Figure 7A, when in the deployed condition;
Figures 8A-D are schematic front (i) and plan (ii) views of various exemplary configurations of a deflector member for use in a safety device according to exemplary embodiments of the present invention;
Figure 9 is a schematic diagram of a large goods vehicle including a safety device according to another exemplary embodiment of the present invention;
Figure 10 is a schematic block diagram of some of the principal components of a safety device according to yet another exemplary embodiment of the present invention;
Figure 11 is a schematic diagram of a large goods vehicle including the safety device of Figure 9 when deployed;
Figure 12 is a flow chart illustrating a method of deployment of the safety device of Figure 9;
Figure 12A is a schematic diagram of a side under-run guard including a safety device according to another exemplary embodiment of the present invention;
Figure 12B is a schematic diagram of a side under-run guard including the safety device of Figure 12A when deployed;
Figure 13A is a schematic diagram of a large goods vehicle including a safety device according to another exemplary embodiment of the present invention; and
Figure 13B is a schematic diagram of a large goods vehicle including the safety device of Figure 13A when deployed.

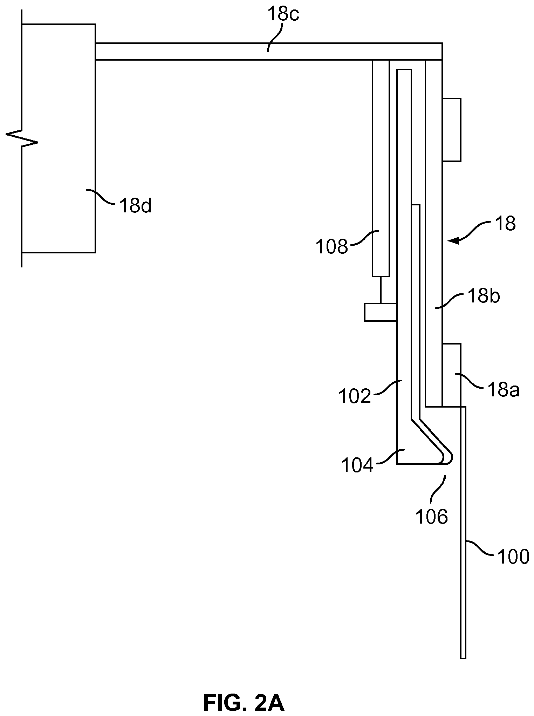

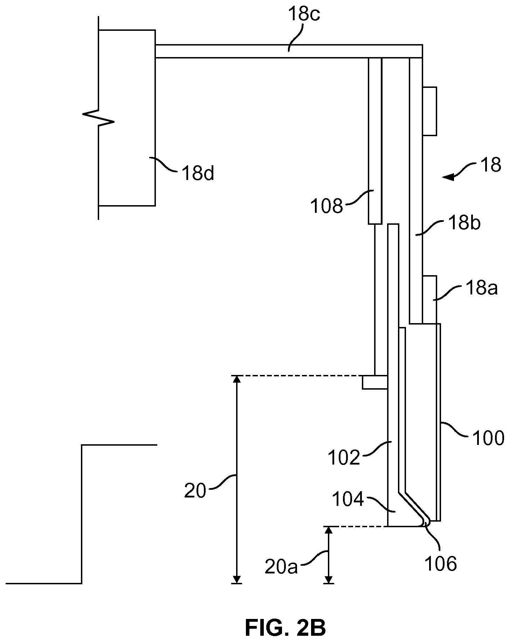

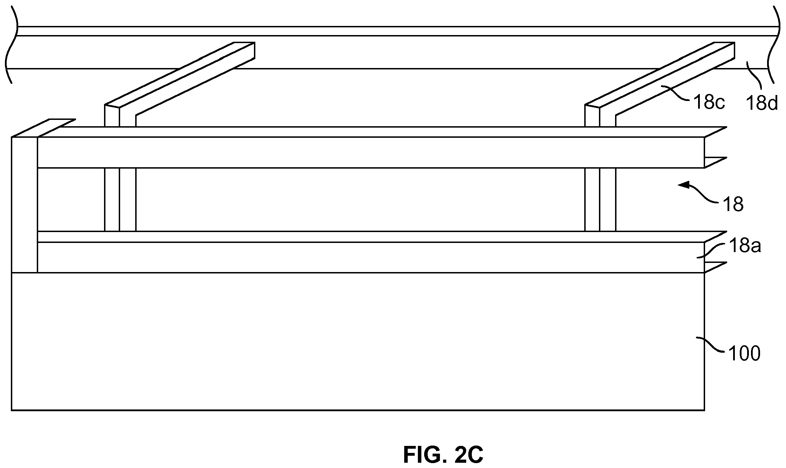

Referring to Figures 2A, 2B and 2C of the drawings, in a first exemplary embodiment of the present invention, a safety device is provided that comprises a deflector member 100 comprising a 'skirt' of (resiliently) flexible material, such as PVC, Glassfibre Reinforced Plastic (GRP), thermoplastic, rubber, etc. affixed along its upper edge to the lower horizontal guard rail 18a of the side under-run guard 18 of a vehicle, such that it extends substantially vertically downward therefrom, into the clearance gap 20. In this exemplary embodiment of the invention, it is envisaged that the deflector member 100 is sufficiently flexible, in its unsupported state (in the stowed condition illustrated schematically in Figure 2A of the drawings) as to be relatively easily deflected out of the clearance gap 20 in the event of a force being applied thereto, such that, during normal operation of the vehicle, if the deflector member 100 hits a curb or similar obstruction, it is simply deflected thereby without damage to the deflector member 100 or the obstruction.

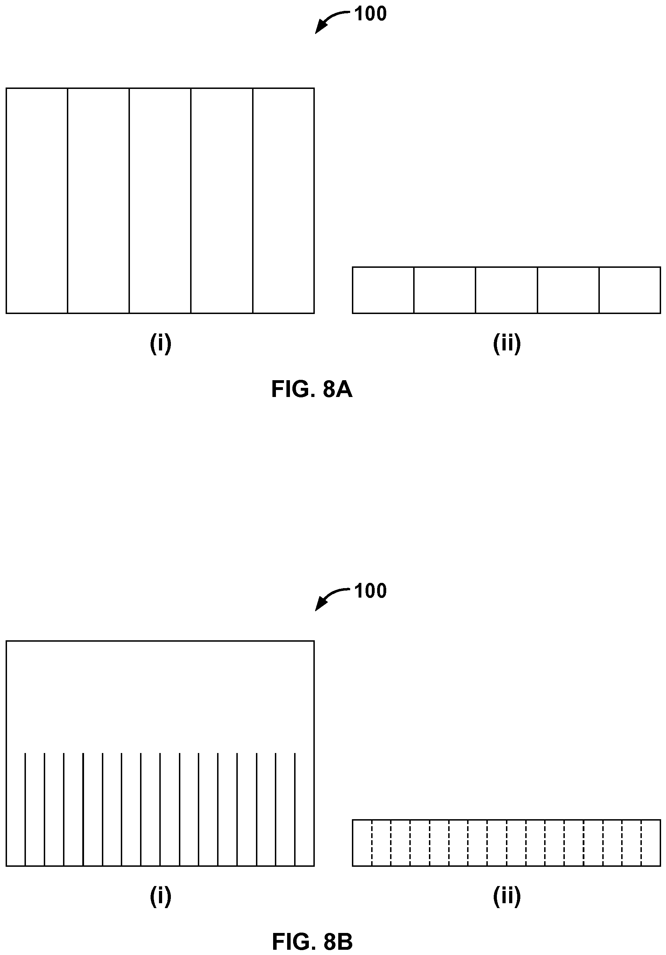

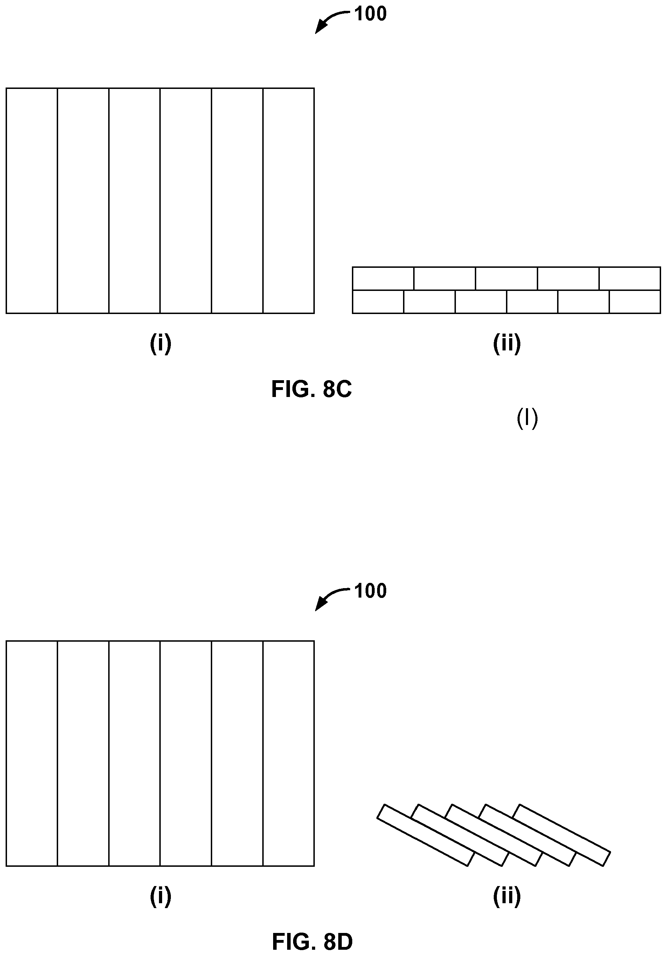

The deflector member 100 may comprise a single solid sheet of resiliently flexible (or 'sprung') material but may, alternatively, be of a number of different configurations. For example, and referring to Figure 8 of the drawings, the deflector member 100 may comprise a set of vertically oriented, parallel flaps (Figure 8A), with or without gaps therebetween. Another configuration, illustrated schematically in Figure 8B, might be a sheet of material with a plurality of vertical slits extending only partially along the height of the sheet so as to define a 'fringe' or 'comb' portion along the lower edge. The exemplary configuration shown in Figure 8C of the drawings, comprises a multi-layered structure, each layer comprising a plurality of vertically aligned flaps, with the flaps of each layer being horizontally offset (see plan view). In Figure 8D of the drawings, and exemplary deflector member 100 is illustrated which comprises a plurality of vertically overlapping flaps (which may or may not be fixed along their entire lengths to the adjacent flap(s)). In general, the configuration of the deflector member 100 may be such that its resilient and/or deflective properties may change along its height such that, for example, it is less resilient (and, therefore, more flexible and easily deflected) at the bottom edge than at the top. Various other suitable configurations for the deflector member 100 will be apparent to a person skilled in the art, and the present invention (in relation to the exemplary embodiment described and illustrated with reference to Figures 2A and 2B and/or other exemplary embodiments of the invention) is not necessarily intended to be in any way limited in this regard. As stated above, the nature of the deflector construction, configuration and/or properties may vary along its length or drop, or both such that it may be more resilient in some parts than others, for example.

The safety device further comprises an elongate deflector support leg 102 mounted behind the side under-run guard 18 of the vehicle for substantially vertical movement between a raised position (stowed condition, Figure 2A), in which the lower end of the of the support leg 102 is close to the lower edge of the guard a8 (and the upper edge of the deflector member 100), i.e. outside of the clearance gap 20, and a lowered position (deployed condition, Figure 2B), in which the lower end of the support leg 102 extends into the clearance gap 20 (well below the lower edge of the guard 18), close to the lower edge of the deflector member 100 at its rear surface. A foot member 104 is mounted on, or formed integrally with, the lower end of the support leg 102 such that it projects therefrom toward the rear surface of the deflector member 100, projecting below the lower edge of the guard 18, beyond the rear edge thereof and extending along its width to a point substantially in-line with its front edge. In some exemplary embodiments, the foot member may form a part or all of the guard configuration in normal operation. The foot member 104 may comprise a distal deflector lobe portion 106.

An actuator 108 is mounted on the underside of the guard arm(s) 18c (or attached to the chassis/bodywork) and extends downwardly, alongside the support leg 102 and communicably coupled thereto. The actuator 108 may be any form of actuator, including, but not limited to, for example, pneumatic, hydraulic, gravity release, electrical, etc., and is operable to move the support leg 102 from the stowed condition to the deployed condition, when the required conditions are met, as described in more detail hereinafter.

In use, when the support leg 102 is in the stowed condition, the deflector member 100 is sufficiently flexible to be deflected by any impacting obstruction, without damage to it or the obstruction. However, in the deployed condition, with the foot member 104 behind the deflector member 100, adjacent its lower edge, he deflector member 100 is prevented thereby from being deflected by an impact against its front (outer) surface and, instead, such an external force will be counteracted by the elasticity/resilient flexibility of the deflector member surface and the object creating the above-mentioned impact will instead be actively deflected back, away from the deflector member surface and, therefore, side under-run of the vehicle. The support leg 102 may be mounted such that it is designed to shear or otherwise become detached from the assembly if it is subject to a force or impact greater than some predetermined threshold. In other exemplary embodiments, the support leg 102 may be formed of a resilient material that allows some flexibility to allow for excessive force, to prevent damage thereto, or it may be spring mounted to enable this type of flexing under excessive force.

The actuator 108 may be deployed to move the support leg 102 from the stowed condition to the deployed condition by a control module (not shown) in response to one or more predetermined conditions. For example, in its simplest form, deployment may be effected by a manually-operable switch button, actuated by an operative, to generate a control signal to cause deployment of the actuator. However, in some preferred exemplary embodiments, the control module may be configured to deploy the actuator 108 automatically in response to one or more predetermined conditions. For example, such predetermined condition(s) may be vehicle conditions indicative that the vehicle is turning, e.g. the deployment of an indicator signal, braking below a certain speed, and/or turning the steering wheel more than some predetermined angle (possibly limited to turning in one direction only, i.e. for the UK, a left-hand turn). However, additionally or alternatively, vehicle sensors (such as proximity sensors, impact sensors or image sensors) may be communicably coupled to the control device, such that a signal from one or more of the sensors, indicative of an obstruction in the region of the vehicle side under-run may cause the control module to deploy the actuator. Thus, in one exemplary embodiment, the control module could be configured to change the safety device from a dormant mode to a "live" mode in response to a vehicle condition indicative that it is turning in a certain direction, and the to move the support leg 102 from the stowed condition to the deployed condition in the event that an obstruction or impact is sensed in the region of the clearance gap 20. The actuator may be actuated remotely, or by means of a control module hard wired thereto and mounted in close proximity to the safety device components. In an exemplary embodiment, once deployed, the safety device may be required to be manually reset by an operative, but in other embodiments this, too, could be effected automatically or remotely.

In some exemplary embodiments, the actuator may allow for single or multiple intermediate (semi-) deployed positions, such that, if one or more conditions are met, then the device may be partially or progressively deployed (i.e. such that the support leg is partially lowered to reduce the clearance gap and/or change the resistance properties of the deflector. This increases the protection offered in that intermediate state, and may have the additional effect of reducing reaction time to full deployment when other criteria are determined to have been met.

Referring specifically to Figure 2B of the drawings, it can be seen that, in the deployed condition, the deflector member 100 extends a significant way into the clearance gap 20, leaving a relatively very small clearance gap 20a between the lower edge of the deflector member 100 and the ground surface. Ideally, it is thought that this reduced clearance gap 20a should be minimised and may be set by the lowest chassis height of the vehicle in laden condition. In some exemplary embodiments, the support leg 102 may be a spring mounted, telescopic member to allow for some compression.

It will be appreciated that an additional deflector surface 110, again of a suitable resiliently flexible/elastic/'sprung' material, may be provided on the inner surface of the support leg 102 and/or the outer surface of the foot member 104 and deflector lobe 106.

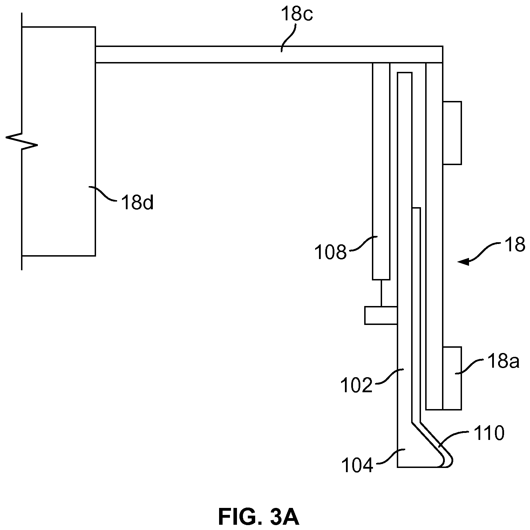

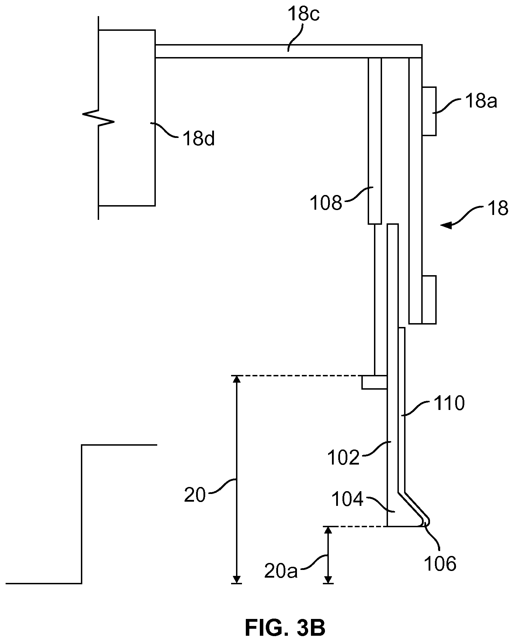

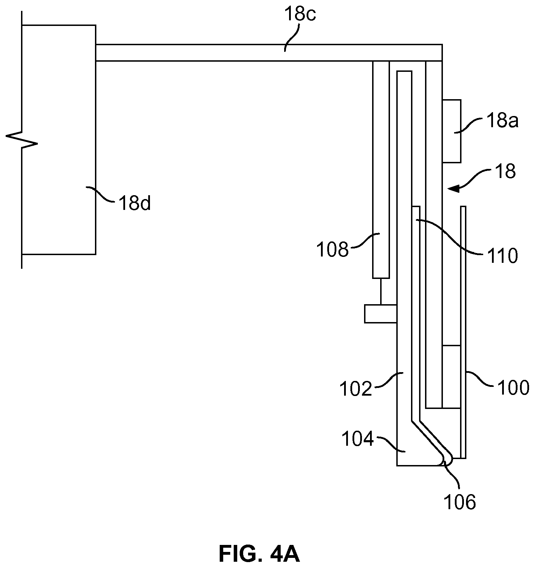

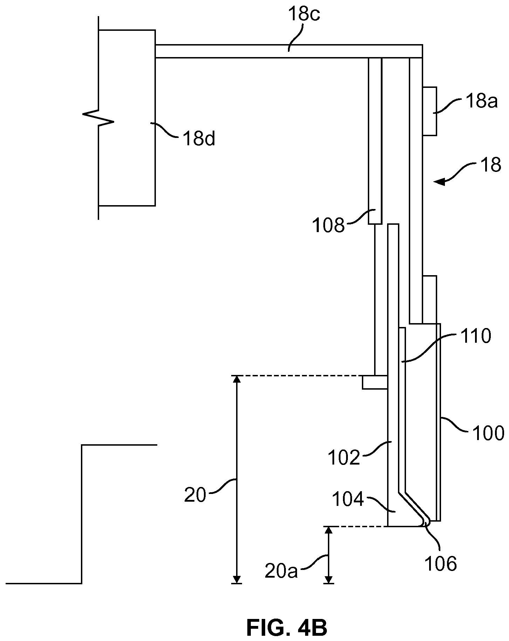

Referring to Figures 3A and 3B of the drawings, in an alternative exemplary embodiment, the separate deflector member 100 may be omitted, and the deflector surface 110 on the inner surface of the support leg 102 may itself comprise the main deflection surface when the support leg 102 is deployed in the event the required conditions are met. Referring to Figures 4A and 4B of the drawings, in another exemplary embodiment, the deflector member 100 may be mounted to the outer surface of the side under-run guard 10 for vertical, slidable movement relative thereto, and communicably coupled to the support leg for corresponding movement between a stowed condition (above the clearance gap 20) and a deployed position, below the guard 18 and obstructing a substantial part of the clearance gap 20.

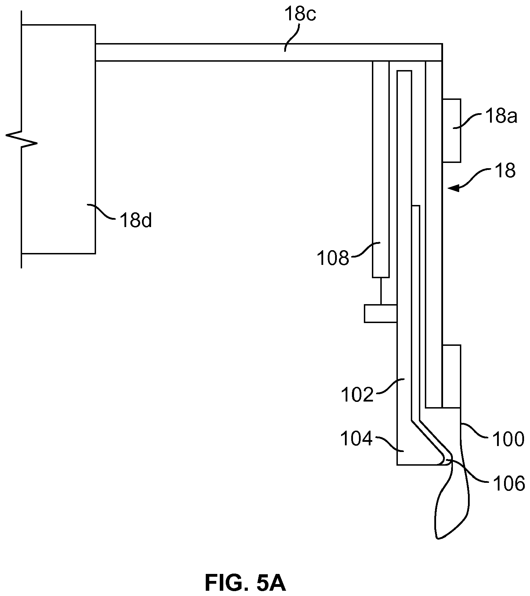

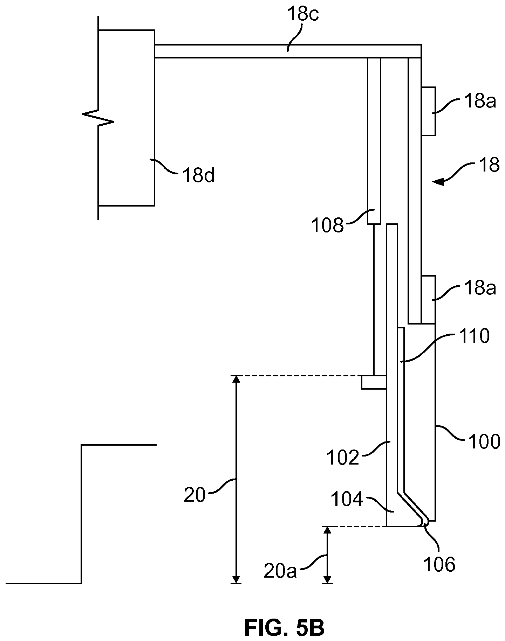

Referring to Figures 5A and 5B of the drawings, in another exemplary embodiment, the deflector member 100 may be sufficiently flexible to be bent or 'folded' in a stowed condition (Figure 5A) such that it does not obstruct the clearance gap 20 during normal use of the vehicle. In this case, the lower end of the deflector member 100 is coupled to the foot member 104 (or the lower end of the support leg 102) such that, when the actuator is deployed and the support leg 102 is lowered to the deployed condition, the lower edge of the deflector member 100 is also lowered and drawn taut to provide the required deflective surface over the clearance gap 20.

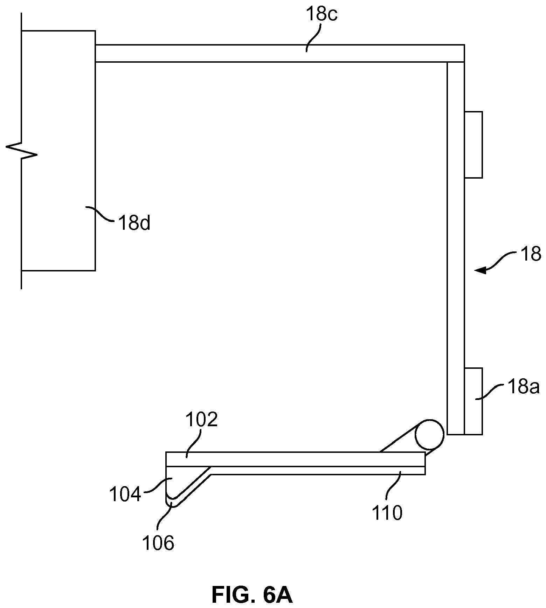

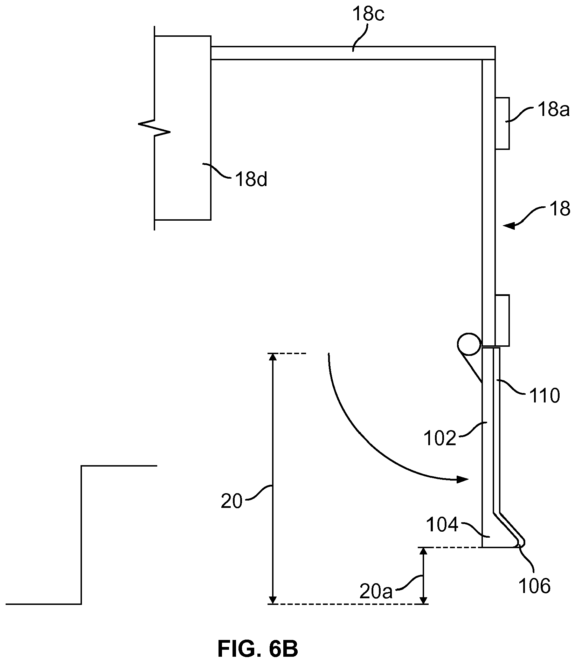

Referring to Figures 6A and 6B of the drawings, a deflector surface 100 of a suitable resiliently flexible/elastic material, is provided on the inner surface of the support leg 102 and (optionally) the outer surface of the foot member 104 and lobe portion 106. In this case, the support leg 102 is pivotally or hingedly mounted to the lower horizontal rail 18a of the vehicle side under-run guard 18 for movement between a stowed condition (Figure 6A), in which it extends rearwardly of, and substantially orthogonally to, the vertical legs 18b of the guard 18, and a deployed condition (Figure 6B), in which it extends substantially vertically and downward from the lower edge of the guard 18, to obstruct the clearance gap 20 and deflect any impacting object/person away therefrom. Once again, actuation of the pivotal mechanism may be effected by any suitable means, under the control of a control module, and the present invention is not necessarily intended to be in any way limited in this regard. Furthermore, some means may be incorporated to allow the support leg 102 to break off or shear under excessive force. Alternatively, some resilience may be incorporated therein to allow flexing under an impact greater than that caused by a pedestrian or cyclist. Such resilience may be achieved by material selection or by mechanical means (e.g. spring). Other options include fixed or variable resistance in the actuation means, such as compression of air in the case of a pneumatic actuation means or variable power in the case of electrical actuation means.

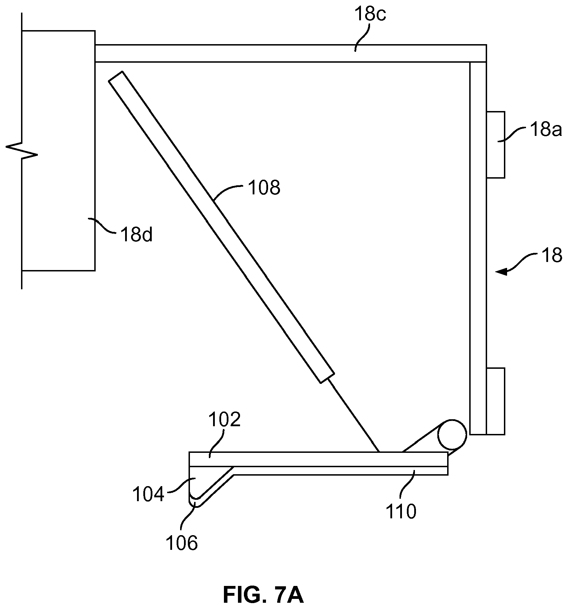

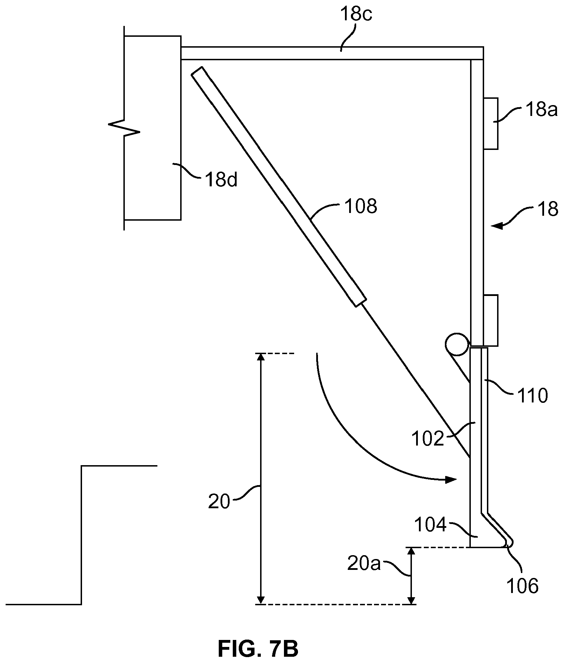

Referring to Figures 7A and 7B of the drawings, in some exemplary embodiments, the actuator 108 may extend from the underside of the vehicle chassis 18d, and/or have an operational footprint, at an angle, rather than substantially vertically. In the example shown, the actuator 108 can be seen to extend from the guide arms 18c, at a point close to the vehicle chassis 18d, outwardly and at an angle , toward the rear surface of the side under-run guard 18. This configuration is considered to be potentially particularly useful if it is required to avoid interference with other vehicle components, such as the fuel tank, and other possible configurations to achieve this objective are envisaged. In all of the above-described embodiments, the force of the actuator may be set to a specific level. For example, for a pneumatic actuator, there may be a limit the possible compression of air may be limited/varied by the use of a pressure regulator, relief valve or other suitable means. The force may be set to allow the deflector surface to be moved to the deployed condition and to remain fixed there under moderate loads (i.e. the displacement/deflection of vulnerable road users), but to allow some 'give' under higher loads or in the event that the deflection member hits a curb or other static/fixed object. The force of the actuator may be partially or progressively variable, for example via the control module, such that the 'give' may be varied according to the sensed conditions.

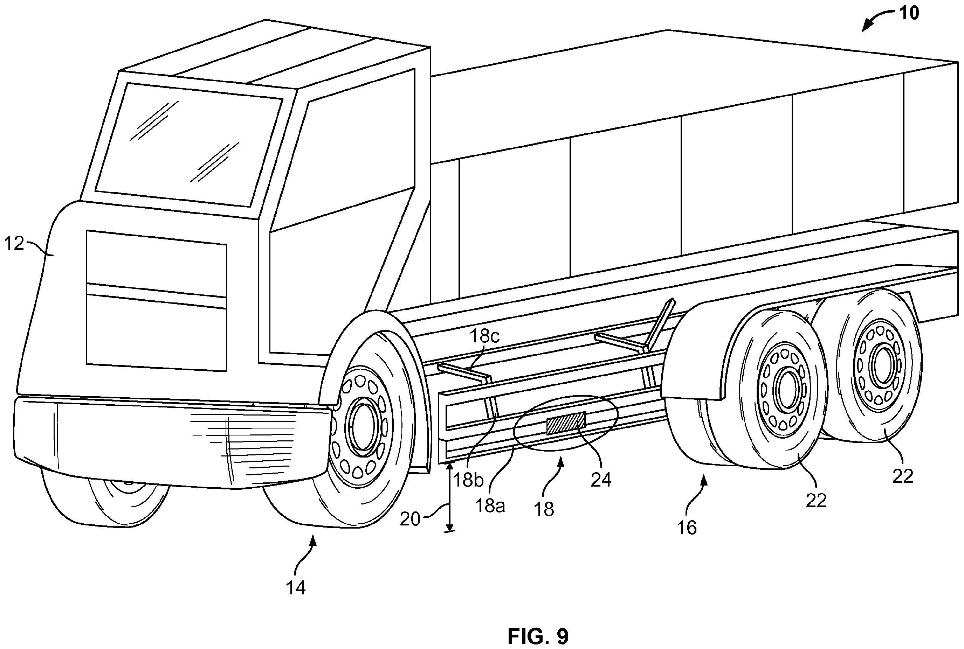

Referring now to Figure 9 of the drawings, a safety device according to another exemplary embodiment of the present invention comprises an airbag unit 24, which includes an inflation mechanism, concealed within a housing mounted on the lower horizontal bar of the under-run guard frame 18, behind plastic flaps or doors which are designed to "tear open" under the force of the bag inflating.

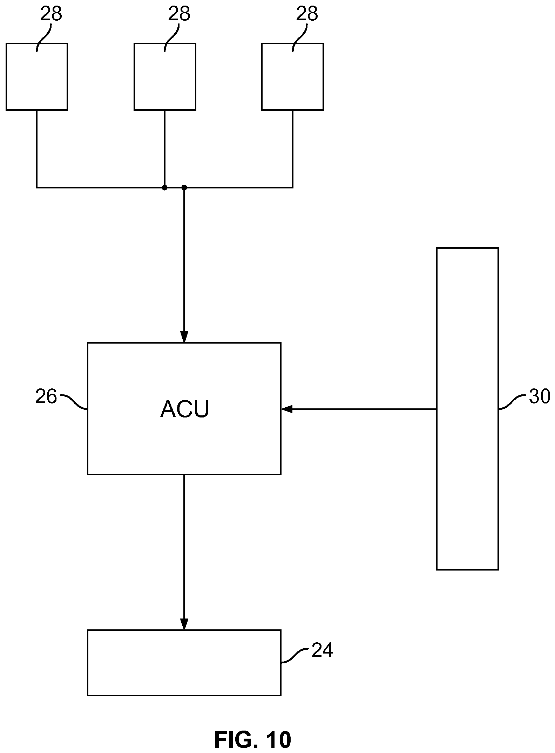

Referring additionally to Figure 10 of the drawings, an airbag control unit (ACU) 26 is mounted within the vehicle itself, remote from the airbag unit 24, and is configured to monitor one or more sensors 28 within the vehicle (e.g. accelerometers, impact sensor, proximity sensors, etc). The ACU 26 can be in two distinct states or modes: a dormant mode and a live mode. The ACU 26 is normally in the dormant mode unless triggered or switched to the live mode by a predetermined vehicle condition.

The above-mentioned predetermined vehicle condition may, for example, comprise one or more of the vehicle speed dropping below a predetermined level, the indicator being deployed, the steering axle being moved to a turning configuration, or any other condition that might be indicative of the vehicle turning. A sensor 30 monitors the one or more vehicle conditions, and is configured to transmit a switching signal in the event that one or more of the predetermined vehicle conditions becomes 'true' The switching signal, in turn, is configured to switch the ACU from a dormant mode to a live mode. The switching signal may comprise a continuous or periodic signal which, whilst operative, causes the ACU to remain in the live mode. In this case, when the switching signal stops, the ACU is configured to automatically switch back to the dormant mode. Alternatively, the ACU may be configured to remain in the live mode until a further switching signal is received from the sensor 30 (indicative that the predetermined vehicle condition is no longer 'true'), which causes the ACU to switch back to the dormant mode.

When in the live mode, the ACU becomes responsive to the one or more sensors 28, which are configured to monitor the area around the side of the vehicle. In one exemplary embodiment of the invention, one of the sensors may comprise a proximity sensor, radar, camera and/or a mechanical impact sensor. The safety device is configured to deploy the airbag in the event that a predetermined threshold is reached or exceeded, and this threshold is dependent on the sensors being used. Thus, for example, if a proximity sensor is being employed, the threshold would comprise the detection of an object within a predetermined distance of the sensor. Equally, in the case, of a camera or radar, the threshold would comprise a distance measure in respect of a detected object near the side of the vehicle. Clearly, if a mechanical impact sensor is employed, the threshold would comprise a force value indicating that an impact of a predetermined force has occurred.

Irrespective of the nature and number of sensors 28 employed, once the requisite threshold has been reached or exceeded, a signal from the respective sensor triggers the ACU to ignite a gas generator propellant to rapidly inflate a fabric bag. The airbag is typically inflated with a pyrotechnic device, commonly called an initiator, which consists of a conductor wrapped in a combustible material, which activates with a current pulse of between 1 to 3 amperes, in less than 2 milliseconds typically. When the conductor becomes hot enough, it ignites the combustible material, which initiates the gas generator. A solid propellant inside the airbag inflator is ignited, and the burning propellant generates inert gas which rapidly inflates the airbag, typically in approximately 20-30 milliseconds. The size of the airbag and, therefore, the time it takes to inflate, will be dependent on the specific design of the safety device.

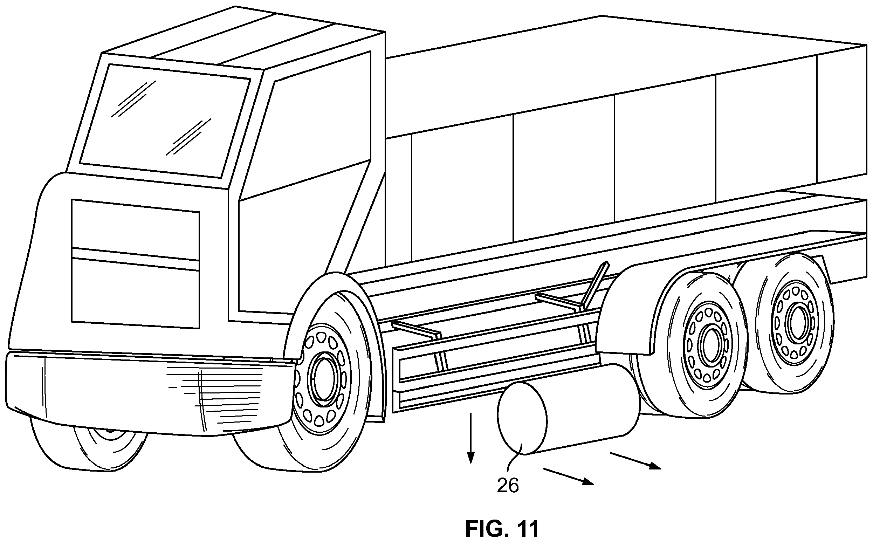

Airbags and ACUs are known, and it will be apparent to a person skilled in the art that the present invention is not necessarily intended to be limited to any specific design or size of airbag. However, in one exemplary embodiment of the invention, and referring to Figure 11 of the drawings, the airbag, when inflated, may be generally cylindrical, having a length of approximately half of the length of the under-run guard frame 18. The unit may be mounted on the outer surface of the lower horizontal bar of the guard, in front of the rear axle 16, such that it deploys both down and outward, to fill the clearance gap 20 in front of the rear axle 16 and push a vulnerable road user away from the side of the vehicle.

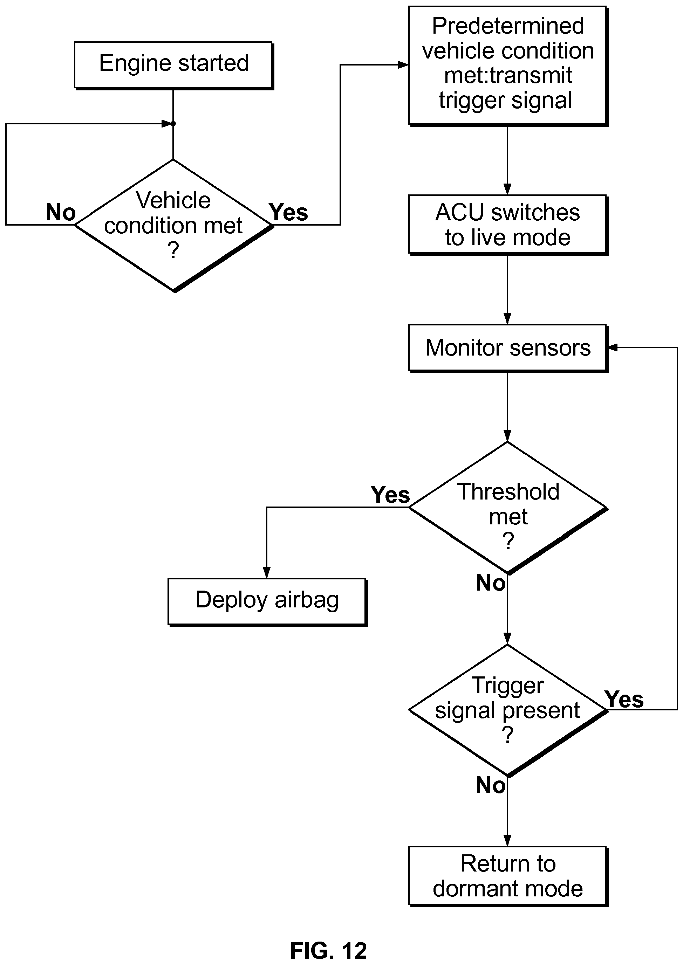

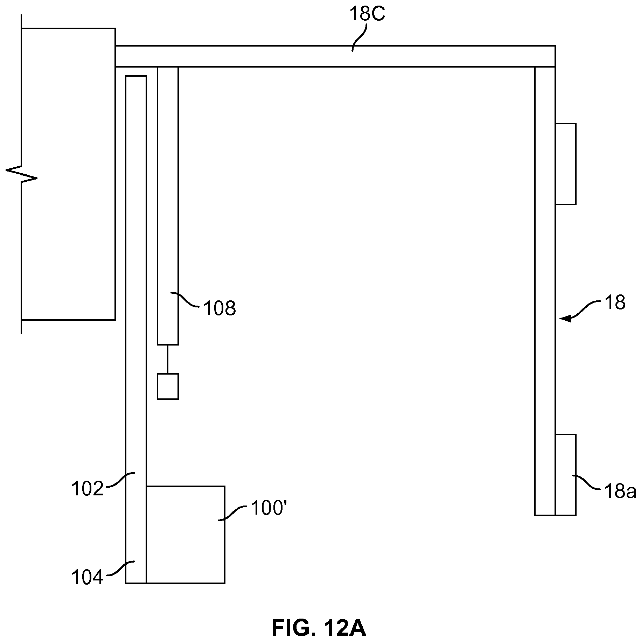

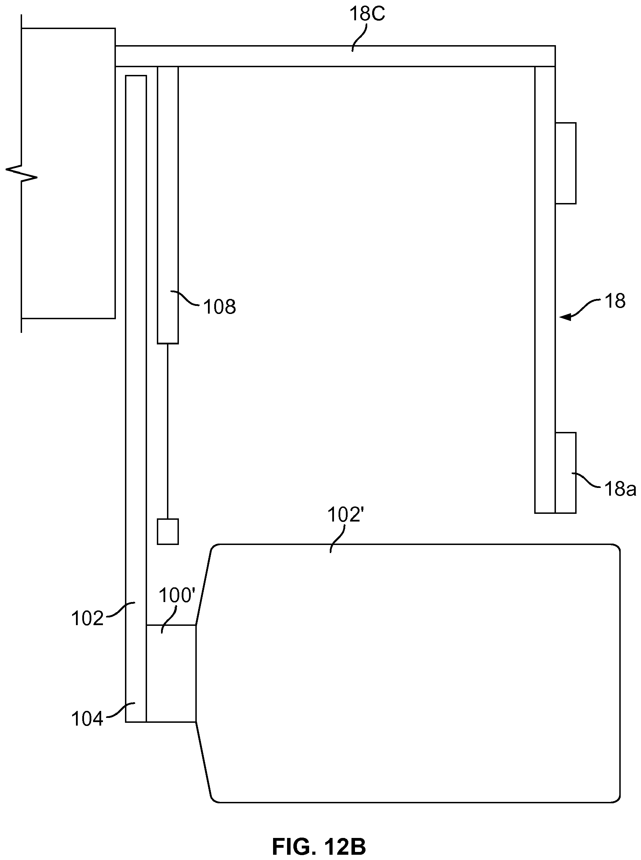

Thus, referring to Figure 12 of the drawings, in use, when the vehicle is turning, one or more sensors determines a resultant vehicle condition, for example, that the indicator has been deployed, the vehicle speed has dropped below a predetermined level and/or the steering axle is in a turning position, and, at step 100, transmits a trigger signal to the ACU.

In response to the trigger signal, the ACU switches to a live mode at step 102, thus monitoring inputs from one or more proximity/impact sensors located on the vehicle. In the event that the signal from one of the sensors reaches or exceeds a predetermined threshold, the ACU triggers the initiator and causes the airbag to be deployed at step 104. If the airbag is not deployed, the ACU remains in the live mode until the trigger signal ceases (or a further trigger signal is received), which causes the ACU to return to the dormant mode (at step 106), in which the airbag cannot be deployed.

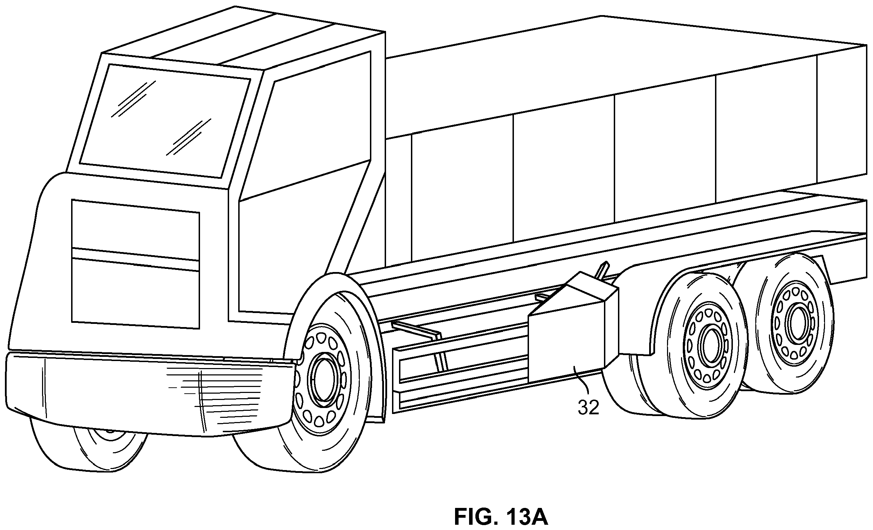

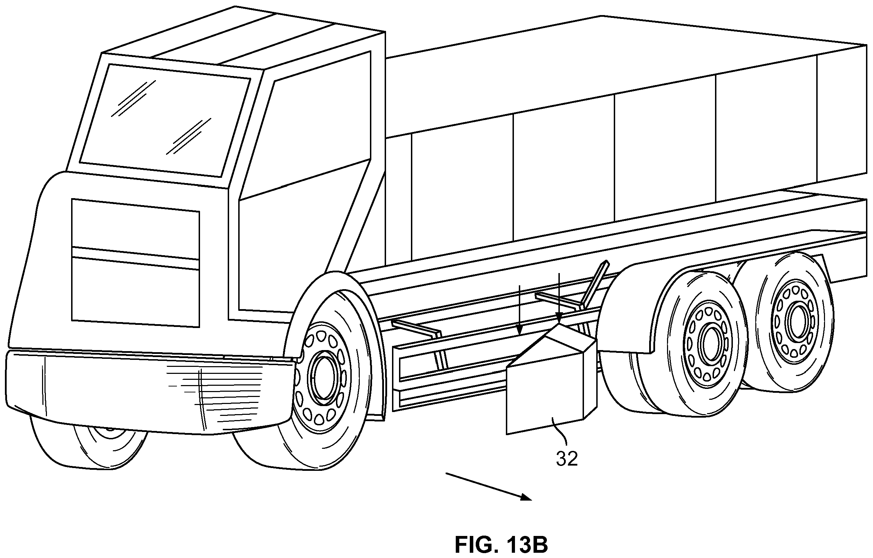

Referring to Figures 13A and 13B of the drawings, in another exemplary embodiment of the invention, the airbag unit of the previous exemplary embodiment may be replaced by a solid deflector 32 which is mounted on the chassis of the vehicle, behind the under-run guard frame and in front of the rear axle 16. The deflector 32 may comprise any solid or resiliently flexible geometric shape, for example, a wedge-like member or a wing blade similar to the type used in snow ploughs and the like. The deflector 32 is slidably mounted, via for example, vertical telescopic supports, such that it is movable (under control of a control unit, not shown) between a first position (Figure 13A) wherein its lower edge is above the lower horizontal bar of the under-run guard frame, and a second position (Figure 13B) wherein its lower edge is below the lower horizontal bar of the under-run guard frame 18, at least partially blocking the clearance gap 20. Additional means may be provided for pushing the deflector 32 outward, away from the side of the vehicle, to assist in blocking or pushing a vulnerable road user away from the rear axle of the vehicle. The advantage of using a physical deflector, rather than an airbag may be the possibility of re-setting the device for multiple use.

Actuation of the deflector from the first position to the second position may be effected in a manner similar to the airbag embodiment described above. Thus, a control unit is provided which is normally in a dormant mode, and the deflector is normally in the first position, away from the clearance gap. When the vehicle is turning, one or more sensors determines a resultant vehicle condition, for example, that the indicator has been deployed, the vehicle speed has dropped below a predetermined level and/or the steering axle is in a turning position, and transmits a trigger signal to the control unit.

In yet another exemplary embodiment of the invention, the deflector may comprise an extension of the under-run guard frame itself, telescopically mounted at a lower end thereof, for movement between a first position in which a lower end thereof lies parallel to and in very close proximity to the lower horizontal bar of the under-run guard frame, and a second position in which the frame extension drops down to at least partially block the clearance gap. Once again, a control unit is provided for effecting actuation, and the operation thereof will be substantially similar to that described above.

In response to the trigger signal, the control unit switches to a live mode, thus monitoring inputs from one or more proximity/impact sensors located on the vehicle. In the event that the signal from one of the sensors reaches or exceeds a predetermined threshold, the control unit triggers an actuator or otherwise causes the deflector to drop down to the above-mentioned second position. Once again, if the deflector is not deployed, the control unit remains in the live mode until the trigger signal ceases (or a further trigger signal is received), which causes the control unit to return to the dormant mode, in which the deflector cannot be deployed.

In a further exemplary embodiment of the invention, the deflector may be in a normally extended position and operable to block the ground clearance gap and/or deflect objects away from the ground clearance gap. In this case, a detector (such as an image capture device or radar detector) is provided for detecting static hazards or obstruction, such as a high curb, and an analysis module receives signals from the detector and analyses the detected obstruction so as to classify it as being static (or otherwise) and/or having a predetermined density. In response to which, the deflector and/or shield is retracted to allow the vehicle to manoeuvre freely without risk of hitting the obstruction.

In yet another exemplary embodiment of the invention, a deployable deflector may be combined with an airbag or other secondary deflector to provide displacement in two dimensions. Thus, referring to Figures 12A and 12B of the drawings, in this case, the support leg 102 is recessed, at least to a certain degree, from the outer perimeter of the vehicle. The 'foot member' in this case is an airbag container 100', housing an airbag. In this case, deployment of the safety device would have the effect of first causing the support leg 102 to drop down (via the actuator 108) to a lower level (relative to the vehicle), closing the vertical clearance gap, and then the airbag 102' would be deployed in a horizontal plane parallel to the road surface and substantially parallel to the centre line of the vehicle, thereby to physically push the vulnerable road user out of the path of the rear wheels of the vehicle. This embodiment may have the advantage of reducing the possibility of trapping a vulnerable road user between the support leg/foot member assembly and the road surface. Whilst this the chances of this occurring are very low, there is an ongoing desire to eliminate, to the greatest extent possible, the possibility of any form of injury to the vulnerable road user.

It will be apparent to a person skilled in the art, from the foregoing description, that modifications and variations can be made to the described embodiments without departing from the scope of the invention as claimed. Furthermore, it will be appreciated that, whilst embodiments of the invention have been described above in relation to large goods vehicles, the present invention is equally applicable to passenger carrying vehicles or, indeed, any road going vehicle in which the rear wheels follow a different path to the leading wheels and which has a gap sufficient to allow a vulnerable road user to be injured by the following wheels.

## Claims

1. A safety device for a vehicle having an under-run guard (18) with a ground clearance gap (20) between said guard (18) and a surface on which said vehicle is located, the device comprising a deflector or shield which is configured to be deflected by a force and/or leave said ground clearance (20) gap substantially unobstructed in a first configuration, and deflect an object away from said ground clearance gap (20) in a second configuration, and an actuator (108) configured to actuate said deflector and/or shield causing it to be moved or otherwise triggered from said first configuration to said second configuration, **characterised in that** the device further comprises:
- at least one sensor (30) for monitoring said at least one predetermined vehicle condition;
- a switching mechanism for switching said device from a dormant mode to a live mode in response to one or more predetermined vehicle conditions; and
- a detector (28) for detecting the presence of an object within a predetermined proximity of said ground clearance gap (20), wherein said actuator (108) is operable and configured to actuate said deflector/shield in response to a said detection of the presence of an object within a predetermined proximity of said ground clearance gap (20) only when the device is in said live mode.

2. A safety device according to claim 1, wherein said deflector and/or shield comprises a deflection member (100) mounted relative to said under-run guard (18), and configured for movement between a first position, away from said ground clearance gap(20), and a second position in which said deflection member acts to at least partially block said ground clearance gap(20).

3. A safety device according to claim 2, wherein said deflection member (100) is a planar deflection member formed of a resiliently flexible material, and said actuator (108) is configured to move said deflection member from a raised position above said clearance gap (20), and a lowered position within said clearance gap (20).

4. A safety device according to claim 3, wherein said movement of said deflection member (100) is linear.

5. A safety device according to claim 4, wherein said deflection member (100) is formed of a flexible material, and wherein, in said raised configuration, at least a lower portion thereof is folded or bent upwardly and secured above said clearance gap (20) and, in said lowered configuration, said folded or bent portion of said deflection member (100) is lowered and the deflection member is drawn taut to form a deflection surface within said clearance gap (20).

6. A safety device according to claim 4 or claim 5, further comprising a support member (102) mounted for movement relative to said guard (18), wherein said deflection member (100) is coupled or affixed to said support member (102) and said actuator (108) is configured to move said support member (102) to cause respective movement of said deflection member (100) from said raised position to said lowered position.

7. A safety device according to claim 3 or claim 4, wherein said deflection member (100) comprises a planar deflective member affixed to an inner surface of a support member (102), said support member (102) being mounted for movement relative to said guard, and said actuator (108) is configured to move said support member (102) from said raised position, in which said deflection member (100) leaves said ground clearance gap (20) substantially unobstructed, and said lowered position in which said deflection member at least partially obstructs said clearance gap (20).

8. A safety device according to claim 1 , wherein said deflection member (100) comprises a planar deflection member formed of a resiliently flexible and/or elastic material and fixedly mounted so as to extend substantially vertically downwardly from said guard (18) into said ground clearance gap (20), the device further comprising a support member (102) mounted relative to said guard for movement between a first position away from the lower edge of said deflection member, and a second position at or adjacent a lower edge of said deflection member (100) to the rear thereof.

9. A safety device according to claim 1, wherein said deflector and/or shield comprises an airbag unit (24) configured to be mounted on said under-run guard (18).

10. A safety device according to claim 9, wherein said airbag when deployed, is generally cylindrical and runs along at least a portion of the length of said ground clearance gap (20), in front of the rear axle of said vehicle.

11. A safety device according to claim 1, wherein said deflector member comprises a solid or resiliently flexible wing blade (32), movably mounted relative to said guard (18), and configured for movement between a first position away from said ground clearance gap (20) and a second position in which said deflector acts to at least partially block said ground clearance gap (20).

12. A safety device according to claim 1, wherein said at least one predetermined vehicle condition comprises one or more of the vehicle travelling below a predetermined speed, an indicator of said vehicle being deployed, and the steering axle of said vehicle being in a turning position.

13. A safety device according to claim 1, wherein said detector (28) for detecting the presence of an object within a predetermined proximity of said ground clearance gap comprises a radar detector, and image detector, and/or a proximity sensor, and said device optionally further comprises an impact detector for detecting an impact on said under-run guard and causing actuation of said deflector and/or shield.

14. A safety device according to claim 1, comprising a detector (28) for detecting a hazard proximal to said clearance gap, classifying said hazard as static or otherwise and/or having a predetermined density, said actuator (108) being operable to cause said detector or shield to be moved to said second configuration in response to detection of a static hazard and/or a hazard of a predetermined density.

15. A safety device according to claim 14, wherein said detector (28) comprises an image capture device or a radar device, and an analysis module for analysing signals from said detector so as to detect therefrom a hazard proximal to said ground clearance gap, and to determine therefrom if said hazard is static and/or of a predetermined density.

## Patentansprüche

1. Sicherheitsvorrichtung für ein Fahrzeug, das einen Unterfahrschutz (18) mit einer Bodenfreiheitslücke (20) zwischen dem Schutz (18) und einer Oberfläche aufweist, auf der sich das Fahrzeug befindet, wobei die Vorrichtung einen Abweiser oder eine Abschirmung, der oder die so ausgebildet ist, dass er oder sie in einer ersten Konfiguration durch eine Kraft ausgelenkt wird und/oder die Bodenfreiheitslücke (20) im Wesentlichen nicht blockiert belässt, und in einer zweiten Konfiguration einen Gegenstand weg von der Bodenfreiheitslücke (20) abweist, und einen Aktuator (108) aufweist, der so ausgebildet ist, dass er den Abweiser und/oder die Abschirmung betätigt, so dass bewirkt wird, dass er oder sie von der ersten Konfiguration zu der zweiten Konfiguration bewegt oder in sonstiger Weise ausgelöst wird, **dadurch gekennzeichnet, dass** die Vorrichtung ferner umfasst:
- mindestens einen Sensor (30) zum Überwachen mindestens eines vorgegebenen Fahrzeugzustands;
- einen Umschaltmechanismus zum Umschalten der Vorrichtung von einem Ruhemodus zu einem aktiven Modus als Reaktion auf einen vorgegebenen Fahrzeugzustand oder mehrere vorgegebene Fahrzeugzustände; und
- einen Detektor (28) zum Erfassen der Gegenwart eines Gegenstands innerhalb einer vorgegebenen Entfernung von der Bodenfreiheitslücke (20), wobei der Aktuator (108) so betätigbar und ausgebildet ist, dass er den Abweiser/die Abschirmung als Reaktion auf eine Erfassung der Gegenwart eines Gegenstands innerhalb einer vorgegebenen Entfernung von der Bodenfreiheitslücke (20) nur dann betätigt, wenn sich die Vorrichtung im aktiven Modus befindet.

2. Sicherheitsvorrichtung nach Anspruch 1, bei welcher der Abweiser und/oder die Abschirmung ein Abweisungselement (100) umfasst oder umfassen, das relativ zu dem Unterfahrschutz (18) montiert und für eine Bewegung zwischen einer ersten Position weg von der Bodenfreiheitslücke (20) und einer zweiten Position, in welcher das Abweisungselement dahingehend wirkt, dass es mindestens teilweise die Bodenfreiheitslücke (20) blockiert, ausgebildet ist.

3. Sicherheitsvorrichtung nach Anspruch 2, bei der das Abweisungselement (100) ein planares Abweisungselement ist, das aus einem elastisch-flexiblen Material ausgebildet ist, und der Aktuator (108) zum Bewegen des Abweisungselements von einer angehobenen Position oberhalb der Bodenfreiheitslücke (20) und einer abgesenkten Position innerhalb der Bodenfreiheitslücke (20) ausgebildet ist.

4. Sicherheitsvorrichtung nach Anspruch 3, bei der die Bewegung des Abweisungselements (100) linear ist.

5. Sicherheitsvorrichtung nach Anspruch 4, bei der das Abweisungselement (100) aus einem flexiblen Material ausgebildet ist und wobei in der angehobenen Konfiguration mindestens ein unterer Abschnitt davon aufwärts gefaltet oder gebogen ist und oberhalb der Bodenfreiheitslücke (20) angebracht ist, und in der abgesenkten Konfiguration der gefaltete oder gebogene Abschnitt des Abweisungselements (100) abgesenkt ist und das Abweisungselement straff gezogen ist, so dass es eine Abweisungsoberfläche innerhalb der Bodenfreiheitslücke (20) bildet.

6. Sicherheitsvorrichtung nach Anspruch 4 oder Anspruch 5, die ferner ein Trägerelement (102) umfasst, das für eine Bewegung relativ zu dem Schutz (18) montiert ist, wobei das Abweisungselement (100) mit dem Trägerelement (102) gekoppelt oder an diesem angebracht ist und der Aktuator (108) zum Bewegen des Trägerelements (102) ausgebildet ist, so dass eine jeweilige Bewegung des Abweisungselements (100) von der angehobenen Position zu der abgesenkten Position bewirkt wird.

7. Sicherheitsvorrichtung nach Anspruch 3 oder Anspruch 4, bei der das Abweisungselement (100) ein planares Abweisungselement umfasst, das an einer inneren Oberfläche eines Trägerelements (102) angebracht ist, wobei das Trägerelement (102) für eine Bewegung relativ zu dem Schutz montiert ist, und der Aktuator (108) zum Bewegen des Trägerelements (102) von der angehobenen Position, in der das Abweisungselement (100) die Bodenfreiheitslücke (20) im Wesentlichen nicht blockiert belässt, und der abgesenkten Position, in der das Abweisungselement die Bodenfreiheitslücke (20) zumindest teilweise blockiert, ausgebildet ist.

8. Sicherheitsvorrichtung nach Anspruch 1, bei der das Abweisungselement (100) ein planares Abweisungselement umfasst, das aus einem elastisch-flexiblen und/oder elastischen Material ausgebildet ist und so feststehend montiert ist, dass es sich von dem Schutz (18) im Wesentlichen vertikal nach unten in die Bodenfreiheitslücke (20) erstreckt, wobei die Vorrichtung ferner ein Trägerelement (102) umfasst, das relativ zu dem Schutz zum Bewegen zwischen einer ersten Position entfernt von der unteren Kante des Abweisungselements und einer zweiten Position an oder angrenzend an eine(r) untere(n) Kante des Abweisungselements (100) zu dessen Rückseite montiert ist.

9. Sicherheitsvorrichtung nach Anspruch 1, bei welcher der Abweiser und/oder die Abschirmung eine Airbageinheit (24) umfasst, die zum Montieren an dem Unterfahrschutz (18) ausgebildet ist.

10. Sicherheitsvorrichtung nach Anspruch 9, bei welcher der Airbag, wenn er entfaltet ist, im Allgemeinen zylindrisch ist und entlang mindestens eines Abschnitts der Länge der Bodenfreiheitslücke (20) vor der Hinterachse des Fahrzeugs verläuft.

11. Sicherheitsvorrichtung nach Anspruch 1, bei der das Abweisungselement einen festen oder elastisch-flexiblen Seitenkörper (32) umfasst, der bewegbar relativ zu dem Schutz (18) montiert ist und zum Bewegen zwischen einer ersten Position entfernt von der Bodenfreiheitslücke (20) und einer zweiten Position, in welcher der Abweiser dahingehend wirkt, dass es die Bodenfreiheitslücke (20) mindestens teilweise blockiert, ausgebildet ist.

12. Sicherheitsvorrichtung nach Anspruch 1, bei welcher der mindestens eine vorgegebene Fahrzeugzustand einen oder mehrere des Fahrzeugs, das unterhalb einer vorgegebenen Geschwindigkeit fährt, eines gesetzten Blinkers des Fahrzeugs und des Vorliegens der Lenkachse des Fahrzeugs in einer Kurvenposition umfasst.

13. Sicherheitsvorrichtung nach Anspruch 1, bei welcher der Detektor (28) zum Erfassen der Gegenwart eines Gegenstands innerhalb einer vorgegebenen Entfernung von der Bodenfreiheitslücke einen Radardetektor, einen Bilddetektor und/oder einen Annäherungssensor umfasst, und wobei die Vorrichtung gegebenenfalls ferner einen Aufpralldetektor zum Erfassen eines Aufpralls auf den Unterfahrschutz und zum Bewirken einer Betätigung des Abweisers und/oder der Abschirmung umfasst.

14. Sicherheitsvorrichtung nach Anspruch 1, die einen Detektor (28) zum Erfassen einer Gefahr in der Nähe der Bodenfreiheitslücke umfasst, der die Gefahr als statisch oder als sonstige Gefahr und/oder derart, dass sie eine vorgegebene Dichte aufweist, klassifiziert, wobei der Aktuator (108) so betätigt werden kann, dass er bewirkt, dass der Abweiser oder die Abschirmung als Reaktion auf die Erfassung einer statischen Gefahr und/oder einer Gefahr mit einer vorgegebenen Dichte zu der zweiten Konfiguration bewegt wird.

15. Sicherheitsvorrichtung nach Anspruch 14, bei welcher der Detektor (28) eine Bilderfassungsvorrichtung oder eine Radarvorrichtung und ein Analysemodul zum Analysieren von Signalen von dem Detektor umfasst, so dass von diesen eine Gefahr in der Nähe der Bodenfreiheitslücke erfasst wird, und davon bestimmt wird, ob die Gefahr statisch ist und/oder eine vorgegebene Dichte aufweist.

## Revendications

1. - Dispositif de sécurité pour un véhicule ayant une protection anti-encastrement (18) avec un espace de garde au sol (20) entre ladite protection (18) et une surface sur laquelle se trouve ledit véhicule, le dispositif comprenant un déflecteur ou écran qui est configuré pour être dévié par une force et/ou laisser ladite garde au sol (20) sensiblement non obstruée dans une première configuration, et dévier un objet à l'opposé dudit espace de garde au sol (20) dans une seconde configuration, et un actionneur (108) configuré pour actionner ledit déflecteur et/ou écran en l'amenant à être déplacé ou autrement déclenché de ladite première configuration à ladite seconde configuration, **caractérisé par le fait que** le dispositif comprend en outre :
- au moins un capteur (30) pour surveiller ledit au moins un état de véhicule prédéterminé ;
- un mécanisme de commutation pour commuter ledit dispositif d'un mode inactif à un mode actif en réponse à un ou plusieurs états de véhicule prédéterminés ; et
- un détecteur (28) pour détecter la présence d'un objet à une distance prédéterminée dudit espace de garde au sol (20), ledit actionneur (108) étant conçu et configuré pour actionner ledit déflecteur/écran en réponse à ladite détection de la présence d'un objet à une distance prédéterminée dudit espace de garde au sol (20) uniquement lorsque le dispositif est dans ledit mode actif.

2. - Dispositif de sécurité selon la revendication 1, dans lequel ledit déflecteur et/ou écran comprend un élément de déflexion (100) monté par rapport à ladite protection anti-encastrement (18), et configuré pour un mouvement entre une première position, éloignée dudit espace de garde au sol (20), et une seconde position dans laquelle ledit élément de déflexion agit pour bloquer au moins partiellement ledit espace de garde au sol (20).

3. - Dispositif de sécurité selon la revendication 2, dans lequel ledit élément de déflexion (100) est un élément de déflexion plan formé d'un matériau élastiquement souple, et ledit actionneur (108) est configuré pour déplacer ledit élément de déflexion d'une position surélevée au-dessus de ladite garde au sol (20) à une position abaissée dans ladite garde au sol (20).

4. - Dispositif de sécurité selon la revendication 3, dans lequel ledit mouvement dudit élément de déflexion (100) est linéaire.

5. - Dispositif de sécurité selon la revendication 4, dans lequel ledit élément de déflexion (100) est formé d'un matériau souple et dans lequel, dans ladite configuration surélevée, au moins une partie inférieure de celui-ci est pliée ou courbée vers le haut et fixée au-dessus de ladite garde au sol (20) et, dans ladite configuration abaissée, ladite partie pliée ou courbée dudit élément de déflexion (100) est abaissée et l'élément de déflexion est tendu pour former une surface de déflexion dans ladite garde au sol (20).

6. - Dispositif de sécurité selon la revendication 4 ou la revendication 5, comprenant en outre un élément de support (102) monté pour un mouvement par rapport à ladite protection (18), ledit élément de déflexion (100) étant couplé ou fixé audit élément de support (102) et ledit actionneur (108) étant configuré pour déplacer ledit élément de support (102) pour entraîner un mouvement respectif dudit élément de déflexion (100) de ladite position surélevée à ladite position abaissée.

7. - Dispositif de sécurité selon la revendication 3 ou la revendication 4, dans lequel ledit élément de déflexion (100) comprend un élément de déflexion plan fixé à une surface interne d'un élément de support (102), ledit élément de support (102) étant monté pour un mouvement par rapport à ladite protection, et ledit actionneur (108) est configuré pour déplacer ledit élément de support (102) de ladite position surélevée, dans laquelle ledit élément de déflexion (100) laisse ledit espace de garde au sol (20) sensiblement non obstrué, à ladite position abaissée dans laquelle ledit élément de déflexion obstrue au moins partiellement ladite garde au sol (20).

8. - Dispositif de sécurité selon la revendication 1, dans lequel ledit élément de déflexion (100) comprend un élément de déflexion plan formé d'un matériau élastiquement souple et/ou élastique et monté de manière fixe de façon à s'étendre sensiblement verticalement vers le bas depuis ladite protection (18) dans ledit espace de garde au sol (20), le dispositif comprenant en outre un élément de support (102) monté par rapport à ladite protection pour un mouvement entre une première position éloignée du bord inférieur dudit élément de déflexion et une seconde position au niveau de ou adjacente à un bord inférieur dudit élément de déflexion (100) à l'arrière de celui-ci.

9. - Dispositif de sécurité selon la revendication 1, dans lequel ledit déflecteur et/ou écran comprend une unité de coussin de sécurité gonflable (24) configurée pour être montée sur ladite protection anti-encastrement (18).

10. - Dispositif de sécurité selon la revendication 9, dans lequel ledit coussin de sécurité gonflable, lorsqu'il est déployé, est généralement cylindrique et s'étend le long d'au moins une partie de la longueur dudit espace de garde au sol (20), devant l'essieu arrière dudit véhicule.

11. - Dispositif de sécurité selon la revendication 1, dans lequel ledit élément de déflecteur comprend une pale d'aile solide ou élastiquement souple (32), montée de manière mobile par rapport à ladite protection (18), et configurée pour un mouvement entre une première position éloignée dudit espace de garde au sol (20) et une seconde position dans laquelle ledit déflecteur agit pour bloquer au moins partiellement ledit espace de garde au sol (20).

12. - Dispositif de sécurité selon la revendication 1, dans lequel ledit au moins un état de véhicule prédéterminé comprend un ou plusieurs parmi le véhicule se déplaçant en dessous d'une vitesse prédéterminée, un indicateur dudit véhicule qui est déployé, et l'essieu directeur dudit véhicule qui est dans une position de virage.

13. - Dispositif de sécurité selon la revendication 1, dans lequel ledit détecteur (28) pour détecter la présence d'un objet à une distance prédéterminée dudit espace de garde au sol comprend un détecteur de radar, et un détecteur d'image, et/ou un capteur de proximité, et ledit dispositif comprend en outre facultativement un détecteur d'impact pour détecter un impact sur ladite protection anti-encastrement et entraîner l'actionnement dudit déflecteur et/ou écran.

14. - Dispositif de sécurité selon la revendication 1, comprenant un détecteur (28) pour détecter un danger à proximité dudit espace de garde, et classer ledit danger comme statique ou autre et/ou ayant une densité prédéterminée, ledit actionneur (108) étant conçu pour amener ledit détecteur ou écran à être déplacé vers ladite seconde configuration en réponse à la détection d'un danger statique et/ou d'un danger d'une densité prédéterminée.

15. - Dispositif de sécurité selon la revendication 14, dans lequel ledit détecteur (28) comprend un dispositif de capture d'image ou un dispositif de radar, et un module d'analyse pour analyser des signaux provenant dudit détecteur de façon à détecter, à partir de ceux-ci, un danger à proximité dudit espace de garde au sol, et à déterminer, à partir de ceux-ci, si ledit danger est statique et/ou d'une densité prédéterminée.
